(19) Europäisches Patentamt
European Patent Office
Office européen des brevets

(11) **EP 2 927 897 A1**

(12) **EUROPEAN PATENT APPLICATION**

(43) Date of publication:
**07.10.2015 Bulletin 2015/41**

(51) Int Cl.:
*G09F 27/00* (2006.01)  *G09F 9/37* (2006.01)

(21) Application number: **15156077.8**

(22) Date of filing: **23.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.03.2014 KR 20140037311**
**08.04.2014 KR 20140041953**
**23.07.2014 KR 20140093582**

(71) Applicant: **Samsung Electro-Mechanics Co., Ltd.**
**Gyeonggi-do (KR)**

(72) Inventors:
• **Ryu, Jong Gi**
  **Gyeonggi-do (KR)**
• **Park, Seung Min**
  **Seoul (KR)**
• **Son, Hye Hyeon**
  **Gyeonggi-do (KR)**

(74) Representative: **Grünecker Patent- und Rechtsanwälte**
**PartG mbB**
**Leopoldstraße 4**
**80802 München (DE)**

(54) **Electronic notification display apparatus and method**

(57)    A notification display apparatus and method is provided, which may display a notification indicating a person's absence, location, or contact information. The notification display apparatus includes a near field communicator; an electronic paper display (11); and a controller that controls authentication of a mobile terminal of a user through the near field communicator, and receiving of a notification from the authenticated mobile terminal to display the received notification on the electronic paper display (11). A user may easily change a notification displayed on the notification display apparatus, and may display unique and various types of information.

FIG. 1

EP 2 927 897 A1

**Description**

## CROSS-REFERENCE TO RELATED APPLICATION(S)

This application claims priority from Korean Patent Application Nos. 10-2014-0037311, filed on March 28, 2014, 10-2014-0041953, filed on April 8, 2014, and 10-2014-0093582, filed on July 23, 2014, in the Korean Intellectual Property Office, the entire disclosures of which are incorporated herein by references for all purposes.

## BACKGROUND

### 1. Field

The following description generally relates to an electronic notification display apparatus, and more particularly to an electronic notification display apparatus and method that may display notification that includes information indicating a person's absence or location, contact information, or the like.

### 2. Description of the Related Art

There may be a case where a person's schedule or contact information should be notified to or shared among a specific group people. For example, a person's contact information should be left when parking a vehicle, or a person's location or schedule should be notified on a door of a laboratory or an office, or on an office desk when absent from office for some duration.

To this end, a notification may be handwritten directly by a user on a notepad, a sticker, or on a notice pad, or may be recorded using an electronic display device, such as a light-emitting diode (LED) display device, or the like. Such notification may be attached on a front glass of a vehicle or on a dashboard, or on an office door or desk.

However, the notification display device may be uncomfortable or may have limitations when a user wishes to change or add a notification to be displayed.

## SUMMARY

Disclosed is an electronic notification display apparatus that may display a notification easily by using a personal mobile terminal such as a smartphone or the like.

Further, the electronic notification display apparatus may facilitate connection with a mobile terminal.

In addition, the electronic notification display apparatus does not need to change a battery with low power consumption.

In one general aspect, there is provided a notification display apparatus that includes an electronic paper display, and may receive through a near field communicator a notification to be displayed on the electronic paper display. The notification display apparatus may authenticate a mobile terminal of a user, and in response to receiving from the authenticated mobile terminal a request for notification update, may receive an updated notification and display the received notification on the electronic paper display.

The notification display apparatus may further include a power supply with a secondary battery charged by a solar cell.

When connected to the mobile terminal through the near field communicator, the notification display apparatus may authenticate the terminal, and control a new notification or an updated notification to be received from the authenticated terminal.

The notification display apparatus may register the mobile terminal authenticated by user authentication to limit access by unauthenticated users.

In the notification display apparatus, access information of the near field communicator may be automatically acquired by a near field communication (NFC) tag or a visual display tag, e.g., a QR code, using applications of a mobile terminal.

While being in a waiting state, the notification display apparatus may respond to connection from a mobile terminal through a passive near-field communicator to be shifted into an active state where a notification may be received.

The notification display apparatus may display an absence notification when a user is apart from the notification display apparatus by more than a predetermined distance.

The notification display apparatus may include a functional button, in which once the functional button is operated, a plurality of pages may be sequentially displayed on a display.

## BRIEF DESCRIPTION OF THE DRAWINGS

FIG. 1 is a perspective view taken from the front side of an electronic notification display apparatus according to an exemplary embodiment, and FIG. 2 is a perspective view taken from the rear side thereof.
FIG. 3 is a block diagram illustrating a notification display apparatus according to an exemplary embodiment.
FIG. 4 is a flowchart illustrating a notification display method according to an exemplary embodiment.
FIG. 5 is a flowchart schematically illustrating a method of registering a mobile terminal in a notification display apparatus.
FIG. 6 is a flowchart illustrating an example of displaying an absence notification according to an exemplary embodiment.
FIG. 7 is a flowchart illustrating an example of a multi-page display according to an exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

## DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

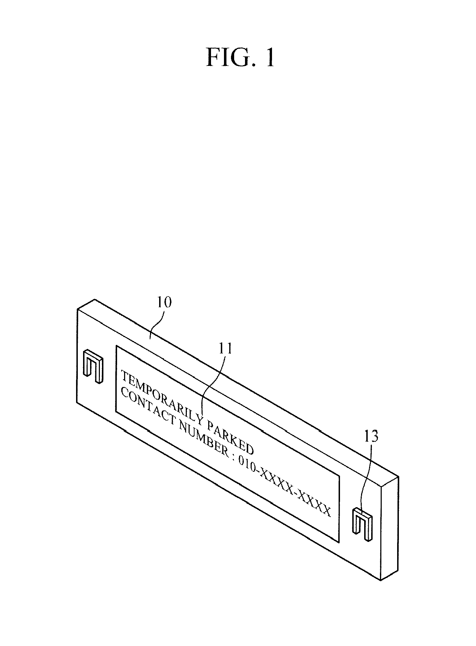

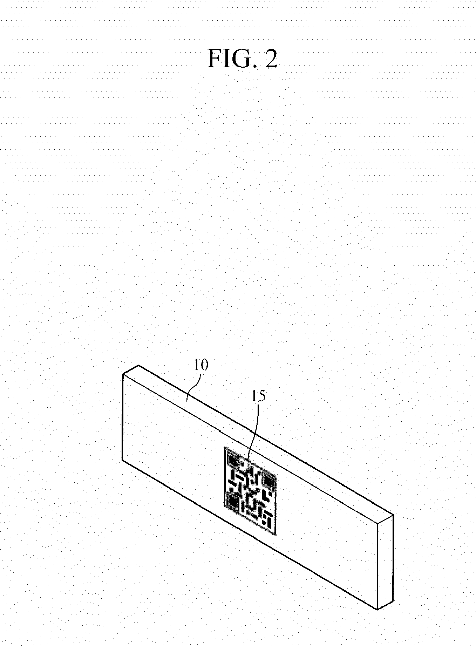

FIG. 1 is a perspective view taken from the front side of an electronic notification display apparatus according to an exemplary embodiment, and FIG. 2 is a perspective view taken from the rear side thereof. As illustrated in FIGS. 1 and 2, in the notification display apparatus according to an exemplary embodiment, an electronic paper display 11 is exposed at an opening portion of a frame 10 made of, for example, a plastic. For example, the display 11 may be an electronic paper display based on an electrophoresis technique. Such electronic paper display may maintain an information display state even without power supply, and may consume low power with a wide viewing angle. However, the present disclosure is not limited thereto, and various known displays may be adopted. According to an exemplary embodiment, on a front surface of the notification display apparatus is provided a fixing groove 13 into which fixture, such as a ring or an adhesion plate, is inserted to fix the notification display apparatus from a windshield of a vehicle or from the inner part of windows and doors.

According to an exemplary embodiment, on a rear surface of the notification display apparatus is provided a sticker with a QR code printed thereon, which includes connection information for wireless communication with a mobile terminal, e.g., information that includes an MAC value required for connection to a ZigBee module in an electronic notification display apparatus. However, the present disclosure is not limited thereto, and may adopt, for example, a barcode, a color code, and the like. For example, in a case where a QR code is attached to a windshield of a vehicle, the QR code may not be visible from the outside of a vehicle but may only be captured inside thereof, which makes it difficult for people other than the owner to access the code, thereby enhancing security.

The notification display apparatus may be attached on an office desk, a door of a meeting room, in a personal space, or in a vehicle to provide information, such as a user's current state or contact information, to a third person. Further, the notification display apparatus may receive notification information, for example, a state notification indicative of a user's current state, or contact information, and may display the received information.

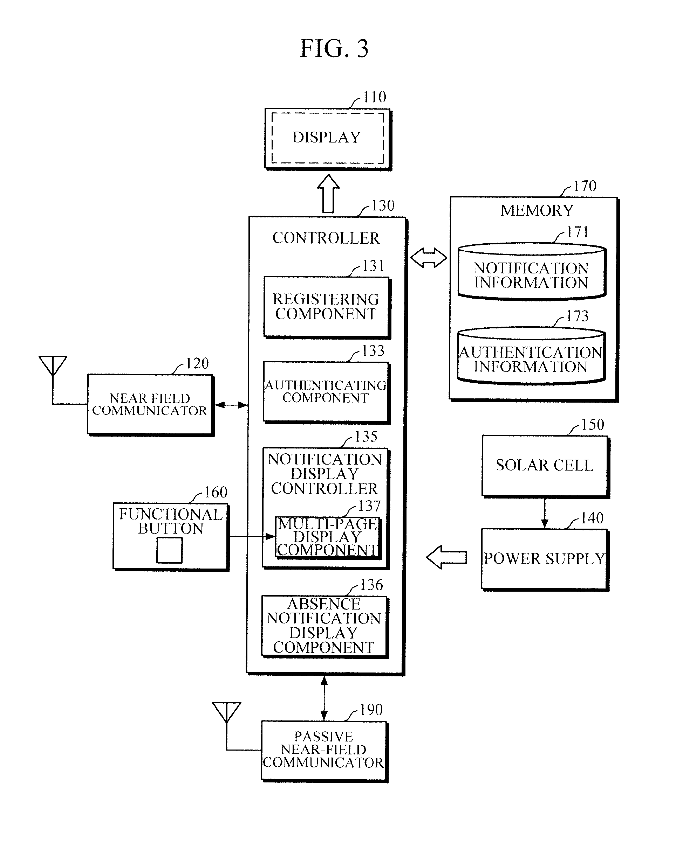

In an exemplary embodiment, the notification display apparatus may perform authentication of a user's mobile terminal through a near field communicator, and may receive an updated notification to display the updated notification on a display. FIG. 3 is a block diagram illustrating a notification display apparatus according to an exemplary embodiment. As illustrated in FIG. 3, a notification display apparatus includes a near field communicator 120, an electronic paper display 110, and a notification display controller 135 configured to control authentication of a user's mobile terminal through the near field communicator 120, to receive an updated notification, and to display the updated notification on the electronic paper display 110.

The near field communicator 120 may communicate with a user's mobile terminal, and may receive from the user's mobile terminal a notification to be displayed. In an exemplary embodiment, the near field communicator 70 may communicate with a relay station through a ZigBee communication method. Like the Bluetooth communication, the ZigBee communication defines MAC based on the IEEE 802.15 standard, and is a near field, low speed communication standard with low power consumption and excellent security. However, the present disclosure is not limited thereto, and may include various near field communication methods, such as a Bluetooth communication method, or a method adopting only a part of the ZigBee communication standard.

Although not a constituent element of an electronic notification display apparatus, the mobile terminal that performs communication may be, for example, a smartphone. A user may execute an application, inputs a notification, and then transmits the input notification to a notification display apparatus.

In an exemplary embodiment, the electronic paper display 110 may be an electronic paper display based on an electrophoresis technique. Such electronic paper display may maintain an information display state even without power supply, and may consume low energy with a wide viewing angle. However, the present disclosure is not limited thereto, and may include various known displays, such as an LED or a different-type electronic paper display.

In an exemplary embodiment, a controller 130 is a microprocessor. In an exemplary embodiment, an integrated circuit chip is used in which operation control circuits of the controller 130, the near field communicator 120, a memory 170, and the display 110 are all mounted. However, the present disclosure is not limited to the configuration, and various system configurations, such as hardware for exclusive use, gate array, individual semiconductor device, and the like, may be applied to hardware. In an exemplary embodiment, the memory 170 may be a nonvolatile memory, such as a flash memory, that may maintain data even without power supply.

The controller 130 may execute programs stored in the memory 170, for example, a program for operating a whole system, or applications. In an exemplary embodiment, a registering component 131, an authenticating component 133, and a notification displaying controller 135 may be implemented by these applications. However, in view of a current system technology, it is evident that these components may be implemented by combinations of software/hardware, or by hardware alone, such as logic for exclusive use or the like.

According to an exemplary embodiment, the authenticating component 133 may authenticate a user's mobile terminal through a near field communicator. In an exemplary embodiment, the authenticating component 133 may establish connections by only responding to access from a mobile terminal of which a hardware number, e.g., a media access control (MAC) address, is registered in advance. MAC addresses of authenticated mobile terminals may be input when, for example, initializing a notification display apparatus.

The notification display controller 135 may receive a notification from an authenticated mobile terminal to display the received notification to an electronic paper display. For example, the notification may be text, numbers, graphic icons, and the like. In another example, the notification may be on/off information of specific patterns provided in advance for an electronic paper display. For example, in a case of a notification display apparatus placed on an office desk, the notification may be patterns of information, such as "in a meeting," "away at the moment," "away on business," "abroad on business," and the like, which may be displayed by on/off selection. Once such notification information is recorded in the electronic paper display 110, its display state is maintained even without power supply. A received notification may be selectively stored in the memory 170 as notification information 171.

In still another exemplary embodiment, the notification display apparatus may further include a power supply 140 that includes a solar cell 150 and a battery charged by the solar cell 150. As the electronic paper display 110 or the near field communicator 120 may consume extremely low power, the power supply technology may enable almost semi-permanent use of the notification display apparatus.

In still another exemplary embodiment, the notification display apparatus may be in a waiting state that consumes minimal power, and when a notification update is necessary, may be activated to receive and display notification information to be updated, and then returns to a waiting state. The electronic paper display 110 may maintain once displayed information, and the flash memory 170 may also maintain stored data.

FIG. 3 is a block diagram illustrating a notification display apparatus according to an exemplary embodiment. At normal times, the electronic paper display 110 may maintain a waiting state that consumes minimal power. In the waiting state, a microprocessor included in the controller 130 operates in a waiting state that consumes minimal power, with no power supplied to other peripheral components, such that the notification display apparatus may be in a state that consumes almost no power.

For example, a passive near-field communicator 190 may be a near field communication (NFC) tag. Once an external NFC reader accesses for communication, an NFC tag is activated by charging a capacitor that supplies power to the NFC tag from a wireless signal received through an antenna. An NFC tag is generally an integrated circuit that includes a memory, a microprocessor, an encryption module, and a wireless communication module, and may include a Virtual Machine-based platform that may execute applications.

The NFC tag may provide access information of the near field communicator 120 through communication with an NFC reader. Further, the passive near-field communicator 190 may generates an event, e.g., hardware interrupt, to the controller 130, to change a state of the notification display apparatus into an active state where data may be received. While being in a state waiting for interrupt, a microprocessor included in the controller 130 is shifted into an active state once an interrupt is generated, in which a notification may be received and a displayed notification may be updated. In this case, a state of the near field communicator 120 may be shifted into a wake-up state to be connected to a mobile terminal that has acquired MAC information. As other constituent elements operate in a similar manner, detailed description thereof will be omitted.

In an exemplary embodiment, the notification display apparatus may perform authentication of user terminals, and register only authenticated user terminals so that notification information may be received only from registered terminals and displayed. For example, only in a case where a password set during initialization is identified and authenticated, an MAC address of a terminal may be registered. A list of MAC addresses, which is identification information of mobile terminals authenticated with set passwords, is stored as authentication information 173 in the memory 170. Then, the authenticating component 133 may authenticate whether access is from the mobile terminals registered on the list. That is, the authenticating component 133 allows updating of notification information of only the mobile terminals registered in the authentication information 173 among mobile terminals accessing identification information of the near field communicator 120.

In an exemplary embodiment, the notification display apparatus may provide mobile terminals with information on access to the near field communicator 120. As illustrated in FIGS. 1 and 2, a visual display tag that includes information on access to the near field communicator 120 may be further provided on a rear surface of the body of the notification display apparatus according to an exemplary embodiment. In an exemplary embodiment, the visual display tag may be a sticker with a QR code printed thereon. However, the present disclosure is not limited thereto, and may adopt, for example, a barcode, a color code, and the like. Mobile terminals identify the QR code to acquire an MAC address of the near field communicator 120 of the notification display apparatus, and may access the near field communicator 120 without any additional user manipulation.

In another exemplary embodiment, the notification display apparatus may include a near field communication (NFC) tag in which information on access to the near field communicator 120 is recorded. For example, the NFC tag may include an antenna and a chip on a rear or front surface of a frame or on a rear surface of a display. A mobile terminal with an NFC reader may access the near field communicator 120 in a contactless manner by acquiring access information, e.g., MAC addresses of the near field communicator 120, without any additional user manipulation.

In another exemplary embodiment, in a case where RF signal strength of a mobile terminal received from the near field communicator is lower than a reference value, the controller may control a predetermined notification to be displayed on an electronic paper display. In an exemplary embodiment, an absence notification display component 136 measures a received signal strength indicator (RSSI) of signals received from the near field communicator 120. The absence notification display component 136 may estimate distances by using signal strength of terminals received from the notification display apparatus. For example, distances may be estimated by connecting power loss or path loss of signals with moving distances of signals between the notification display apparatus and terminals. The relation between path loss of signals and distances may be represented by the Friis equation.

$$L = 20\log_{10}\left(\frac{4\pi d}{\lambda}\right) \quad [dB] \tag{1},$$

in which $\lambda$ represents the wavelength of radio waves, and d represents a distance. In an exemplary embodiment, if the distance in Equation (1) is greater than a predetermined reference distance, for example, 50 cm that is a distance between a terminal and the notification display apparatus when a driver gets out of a car, the notification display controller 135 may control a predetermined notification (e.g., an absence notification or contact information) to be displayed on the electronic paper display component 110. The reference distance may randomly be set by a user.

In an exemplary embodiment, the notification display apparatus may further include a functional button, and the notification display controller 135 may further include a multi-page display component 137. In an exemplary embodiment, once a functional button 160 is operated, the multi-page display component 137 may control a plurality of predetermined pages to be sequentially displayed on the display 110. Specifically, without any need to transmit a state notification through a mobile terminal, a user may change one or more notifications displayed on the display 110 to a basic notification by simply using the functional button provided for the notification display apparatus 100. The basic notification may be predetermined by a user using applications of a mobile terminal paired with the notification display apparatus 100.

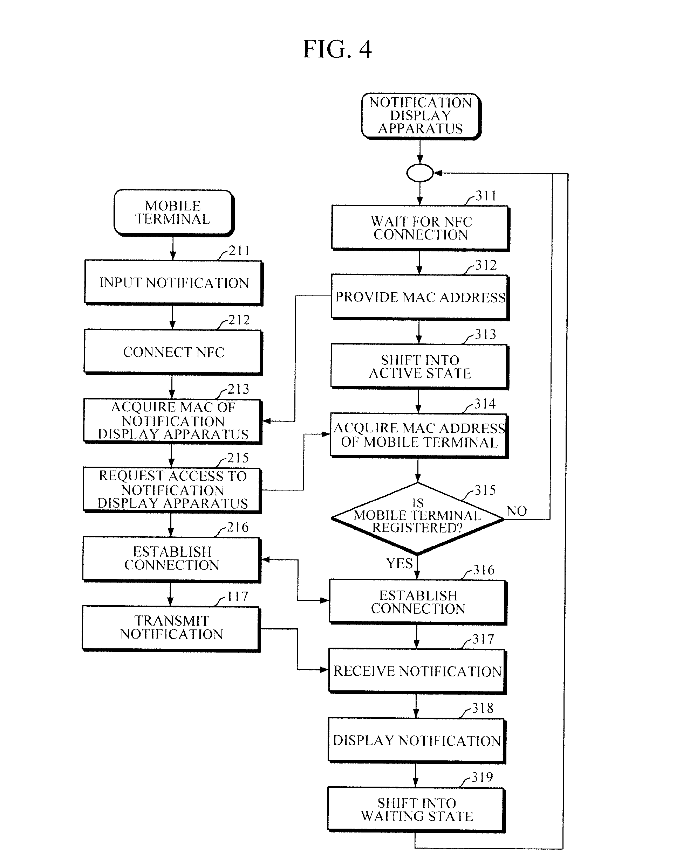

FIG. 4 is a flowchart illustrating a notification display method according to an exemplary embodiment. As illustrated in FIG. 4, a mobile terminal user may access the notification display apparatus to input a notification to be displayed by executing a relevant application in 211, in which the notification display apparatus is in a waiting state. Once a notification is input, an NFC reader of a mobile terminal approaches the notification display apparatus to establish connection in 212. The notification display apparatus provides its MAC address of a near field communicator in 312, and the mobile terminal receives the MAC address in 213, in which the state of the notification display apparatus is shifted into an activation mode according to an event occurrence of the NFC reader.

Subsequently, the mobile terminal requests access to the notification display apparatus through a near field communicator by using the MAC address of the notification display apparatus in 215. The notification display apparatus checks the MAC address of the mobile terminal that has requested access through a near field communicator. If the mobile terminal is authenticated as a terminal registered in a list of MAC addresses in 315, connection is established to the mobile terminal in 316. In the exemplary embodiment, authentication of a mobile terminal may be processed in a microprocessor of the notification display apparatus, i.e., in the authenticating component 133 in FIG. 4.

In another exemplary embodiment, once authentication of a mobile terminal is complete in an NFC tag, an event may be generated to activate a notification display apparatus. In this case, authentication of a mobile terminal may be processed in the passive near-field communicator 190 in FIG. 3.

Once connection is established between a mobile terminal and a near field communicator of the notification display apparatus, the mobile terminal transmits a notification in 117, and the notification display apparatus receives the notification in 317, and displays the received notification on an electronic paper display in 318. Upon completion of the display control, the notification display apparatus is shifted into a waiting state in 319 that consumes minimal power.

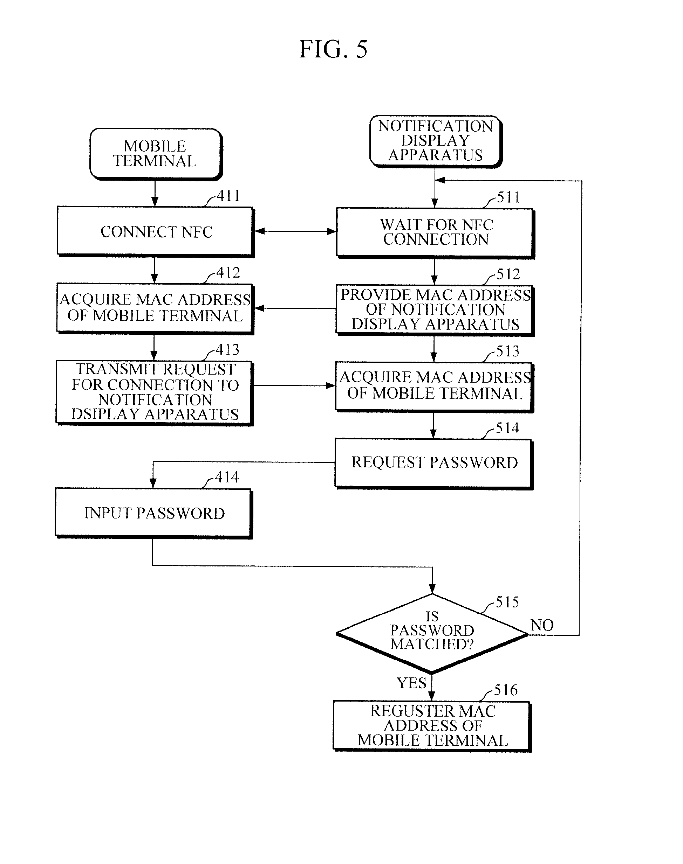

FIG. 5 is a flowchart schematically illustrating a method of registering a mobile terminal in a notification display apparatus. In a notification display method according to an exemplary embodiment, the notification display apparatus performs authentication of a user terminal to register an authenticated user terminal. First, the notification display apparatus is in a waiting state in 511. By approaching an NFC reader of a mobile terminal to the notification display apparatus, the notification display apparatus may be connected to the passive near-field communicator 190, e.g., an NFC tag, in 411. In this case, the passive near-field communicator 190 generates an event, e.g., a hardware interrupt, to the controller 130 so that the notification display apparatus may be shifted into an active state where data may be received. While being in a state waiting for interrupt, a microprocessor included in the controller is shifted into an active state once an interrupt is generated, in which a notification may be received and a displayed notification may be updated. The notification display apparatus shifted into an active state provides its MAC address of a near field communicator in 512, and the mobile terminal receives the MAC address in 412.

Then, the mobile terminal transmits a request for connection to the notification display apparatus through a near field communicator by using the received MAC address of the notification display apparatus in 413. The notification display apparatus acquires the MAC address of the mobile terminal that has requested connection through a near field communicator in 513. The notification display apparatus requests a password from the mobile terminal in 514, and the mobile terminal inputs a password in 414 in response to the request. In a case where the password input by the mobile terminal is matched with a password predetermined during initialization in 515, the MAC address of the mobile terminal is registered in 516. A list of MAC addresses, which is identification information of mobile terminals authenticated with set passwords, is stored as the authentication information 173 in the memory 170.

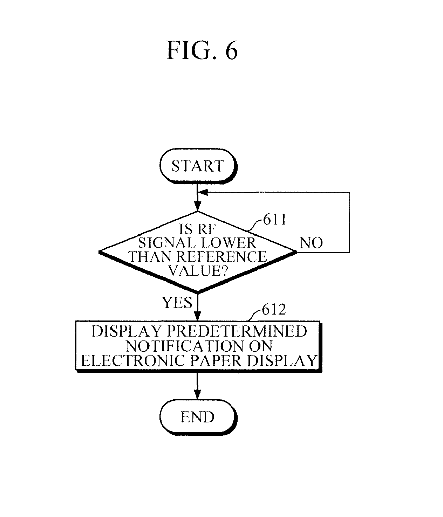

FIG. 6 is a flowchart illustrating an example of displaying an absence notification according to an exemplary embodiment. In an exemplary embodiment, a notification display method may include displaying an absence notification in 612, in which if RF signal strength of a mobile terminal received from the near field communicator 120 is lower than a reference value, a predetermined notification may be displayed on the electronic paper display component 110. The absence notification display component 136 measures a received signal strength indicator (RSSI) of signals received from the near field communicator 120. The absence notification display component 136 may estimate distances by using signal strength of terminals received in the notification display apparatus.

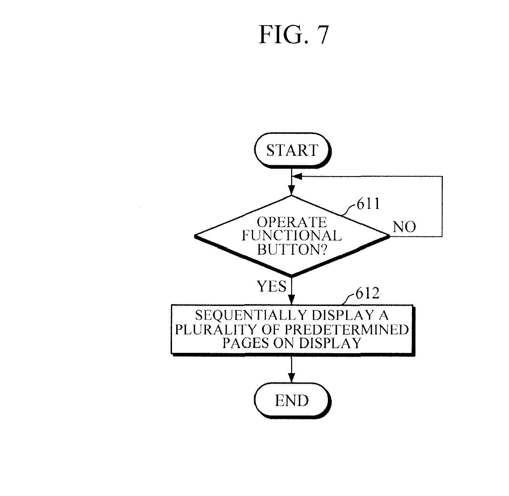

FIG. 7 is a flowchart illustrating an example of a multi-page display according to an exemplary embodiment according to an exemplary embodiment. In a notification display method according to an exemplary embodiment, once the functional button 160 is operated, a plurality of predetermined pages may be sequentially displayed on the display 110 in 712. Specifically, without any need to transmit a state notification through a mobile terminal, a user may change one or more notifications displayed on the display 110 to a basic notification by simply using the functional button provided for the notification display apparatus 100. The basic notification may be predetermined by a user using applications of a mobile terminal paired with the notification display apparatus 100.

A user may easily change a notification or a message displayed on the notification display apparatus, thereby displaying unique and various types of information. In addition, as the notification display apparatus allows only the registered mobile terminals to transmit the notification, thereby enhancing security. Further, by adopting a solar cell that consumes low power, and maintains a display state even without power supply, the notification display apparatus may be used without power supply or battery change. Besides, a function button is provided such that a plurality of pages may be displayed on a display.

The methods and/or operations described above may be recorded, stored, or fixed in one or more computer-readable storage media that includes program instructions to be implemented by a computer to cause a processor to execute or perform the program instructions. The media may also include, alone or in combination with the program instructions, data files, data structures, and the like. Examples of computer-readable storage media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules in order to perform the operations and methods described above, or vice versa. In addition, a computer-readable storage medium may be distributed among computer systems connected through a network and computer-readable codes or program instructions may be stored and executed in a decentralized manner.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

**Claims**

1. A notification display apparatus, the apparatus comprising:

   a near field communicator;
   an electronic paper display; and
   a controller comprising:

   an authenticating component configured to authenticate a mobile terminal of a user through the near field communicator; and
   a notification display controller configured to receive a notification from the authenticated mobile terminal to display the received notification on the electronic paper display.

2. The apparatus of claim 1, further comprising:

   a solar cell; and
   a power supply with a battery charged by the solar cell.

3. The apparatus of claim 1, further comprising a passive near-field communicator, which once the notification display apparatus is activated in response to connection of the mobile terminal, is configured to generate an event to shift the notification display apparatus from a waiting state into an active state to receive the notification.

4. The apparatus of claim 1, wherein when connected to the mobile terminal through the near field communicator, the authenticating component is configured to authenticate the terminal, and to control a new notification or an updated notification to be received from the authenticated terminal.

5. The apparatus of claim 1, further comprising a registering component configured to register the mobile terminal authenticated by user authentication.

6. The apparatus of claim 1, further comprising a visual display tag configured to include access information of the near field communicator on a rear surface of the notification display apparatus.

7. The apparatus of claim 1, further comprising a near field communication (NFC) tag configured to transmit or receive access information of the near field communicator.

8. The apparatus of claim 1, wherein the controller further comprises an absence notification display component configured to display a predetermined notification on the electronic paper display in a case where RF signal strength of the mobile terminal received from the near field communicator is lower than a reference value.

9. The apparatus of claim 1, wherein:

   the notification display apparatus further comprises a functional button; and
   the notification display controller further comprises a multi-page display component configured to sequentially display a plurality of predetermined pages on the display once the functional button is operated.

10. A notification display method of a notification display apparatus with an electronic paper display, the method comprising:

    connecting to a mobile terminal;
    authenticating the connected mobile terminal, and receiving from the mobile terminal a notification to be displayed; and
    displaying the received notification on the electronic paper display.

11. The method of claim 10, further comprising registering the mobile terminal authenticated by user authentication.

12. The method of claim 10, further comprising, prior to every process, shifting a waiting state into an active state to receive a notification once the mobile terminal is connected through the NFC interface.

13. The method of claim 10, further comprising displaying a predetermined notification on the electronic paper display in a case where RF signal strength of the mobile terminal received from the near field communicator is lower than a reference value.

14. The method of claim 10, further comprising sequentially displaying a plurality of predetermined pages on the display once a functional button is operated.

FIG. 1

# FIG. 2

# FIG. 3

# FIG. 4

```
                                        ┌──────────────────┐
                                        │   NOTIFICATION   │
                                        │     DISPLAY      │
                                        │    APPARATUS     │
                                        └──────────────────┘
                                                 │
                                                ( )◄──────────────┐
                                                 │                │
                                              ┌──311              │
                                        ┌──────────────────┐      │
                                        │  WAIT FOR NFC    │      │
                                        │   CONNECTION     │      │
                                        └──────────────────┘      │
                                                 │                │
┌──────────────────┐                          ┌──312             │
│     MOBILE       │                     ┌──────────────────┐     │
│    TERMINAL      │                     │PROVIDE MAC ADDRESS│    │
└──────────────────┘                     └──────────────────┘     │
         │                                       │                │
       ┌──211                                 ┌──313              │
┌──────────────────┐                     ┌──────────────────┐     │
│ INPUT NOTIFICATION│                    │    SHIFT INTO    │     │
└──────────────────┘                     │   ACTIVE STATE   │     │
         │                               └──────────────────┘     │
       ┌──212                                    │                │
┌──────────────────┐                          ┌──314             │
│   CONNECT NFC    │                     ┌──────────────────┐     │
└──────────────────┘                     │ACQUIRE MAC ADDRESS│    │
         │                               │ OF MOBILE TERMINAL│    │
       ┌──213                            └──────────────────┘     │
┌──────────────────┐                             │                │
│  ACQUIRE MAC OF  │◄──                        ┌──315             │
│  NOTIFICATION    │                          ╱         ╲   NO    │
│DISPLAY APPARATUS │                        ╱    IS       ╲───────┘
└──────────────────┘                      ╱ MOBILE TERMINAL ╲
         │                                ╲   REGISTERED?   ╱
       ┌──215                              ╲              ╱
┌──────────────────┐                        ╲          ╱
│ REQUEST ACCESS TO│                          ╲ YES  ╱
│  NOTIFICATION    │──                           │  ┌──316
│DISPLAY APPARATUS │                       ┌──────────────────┐
└──────────────────┘                       │    ESTABLISH     │
         │                                 │   CONNECTION     │
       ┌──216                              └──────────────────┘
┌──────────────────┐                              │
│    ESTABLISH     │◄──                         ┌──317
│   CONNECTION     │                       ┌──────────────────┐
└──────────────────┘                       │RECEIVE NOTIFICATION│
         │                                 └──────────────────┘
       ┌──117                                     │
┌──────────────────┐                            ┌──318
│    TRANSMIT      │                       ┌──────────────────┐
│  NOTIFICATION    │──►                    │DISPLAY NOTIFICATION│
└──────────────────┘                       └──────────────────┘
                                                  │
                                                ┌──319
                                          ┌──────────────────┐
                                          │    SHIFT INTO    │
                                          │  WAITING STATE   │
                                          └──────────────────┘
```

# FIG. 5

```
   ┌──────────────┐                        ┌──────────────────┐
   │    MOBILE     │                        │   NOTIFICATION   │
   │   TERMINAL    │                        │     DISPLAY      │
   └──────────────┘                        │    APPARATUS     │
          │                                └──────────────────┘
          │              ┌411                        │           ┌511
          ▼                                          ▼
   ┌──────────────┐                        ┌──────────────────┐
   │ CONNECT NFC  │◄─────────────────────► │  WAIT FOR NFC    │
   │              │                        │   CONNECTION     │
   └──────────────┘                        └──────────────────┘
          │              ┌412                        │           ┌512
          ▼                                          ▼
   ┌──────────────┐                        ┌──────────────────┐
   │ACQUIRE MAC   │                        │ PROVIDE MAC ADDRESS│
   │ADDRESS       │◄────────────────────── │  OF NOTIFICATION │
   │OF MOBILE     │                        │ DISPLAY APPARATUS│
   │TERMINAL      │                        └──────────────────┘
   └──────────────┘                                  │           ┌513
          │              ┌413                        ▼
          ▼                                ┌──────────────────┐
   ┌──────────────┐                        │ ACQUIRE MAC ADDRESS│
   │TRANSMIT REQUEST│─────────────────────►│  OF MOBILE       │
   │FOR CONNECTION TO│                      │  TERMINAL        │
   │NOTIFICATION    │                      └──────────────────┘
   │DSIPLAY APPARATUS│                               │           ┌514
   └──────────────┘                                 ▼
                                           ┌──────────────────┐
          ┌──────────────────────────────  │ REQUEST PASSWORD │
          │            ┌414                 └──────────────────┘
          ▼
   ┌──────────────┐
   │INPUT PASSWORD│
   └──────────────┘
          │
          └────────────────────┐
                               ▼                     ┌515
                          ◇ IS PASSWORD ◇───NO
                          ◇  MATCHED?   ◇
                               │
                             YES│              ┌516
                               ▼
                        ┌──────────────────┐
                        │ REGUSTER MAC     │
                        │ ADDRESS OF       │
                        │ MOBILE TERMINAL  │
                        └──────────────────┘
```

# FIG. 6

START

IS RF
SIGNAL LOWER
THAN REFERENCE
VALUE? —611

NO

YES

DISPLAY PREDETERMINED
NOTIFICATION ON
ELECTRONIC PAPER DISPLAY —612

END

# FIG. 7

```
                    ┌─────────┐
                    │  START  │
                    └────┬────┘
                         │
                         ▼                611
                    ╱─────────╲
                   ╱  OPERATE  ╲    NO
                  ╱  FUNCTIONAL ╲────────┐
                  ╲   BUTTON?   ╱        │
                   ╲           ╱         │
                    ╲─────────╱          │
                      YES│               │
                         │        612    │
                         ▼               │
        ┌────────────────────────────┐   │
        │   SEQUENTIALLY DISPLAY A    │   │
        │ PLURALITY OF PREDETERMINED  │   │
        │     PAGES ON DISPLAY        │   │
        └──────────────┬─────────────┘   │
                       │                 │
                       ▼                 │
                 ┌─────────┐             │
                 │   END   │             │
                 └─────────┘             │
```

Europäisches
Patentamt

European
Patent Office

Office européen
des brevets

# EUROPEAN SEARCH REPORT

Application Number

EP 15 15 6077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/230497 A1 (STRICKLAND DAVID R [US] ET AL) 25 September 2008 (2008-09-25) * paragraphs [0059], [0111], [0122], [0124], [0177], [0178] * * figures * | 1-14 | INV. G09F27/00 G09F9/37 |
| X | WO 2012/152745 A1 (EC SOLUTION GROUP B V [NL]; HARKES ERIK JAN [NL]) 15 November 2012 (2012-11-15) * page 10, line 11 - line 32 * * page 11, line 3 - line 7 * * page 14, line 31 - page 15, line 7 * * page 18, line 11 - line 37 * * page 19, line 9 - line 28 * * page 21, line 20 - line 26 * * page 22, line 12 - page 23, line 2 * * figures * | 1-14 | |
| X | WO 2008/054715 A2 (SOLICORE INC [US]) 8 May 2008 (2008-05-08) * paragraphs [0012], [0024], [0026] - [0028], [0031], [0048] * * figures * | 1-14 | TECHNICAL FIELDS SEARCHED (IPC) G09F |
| X | WO 2009/103857 A1 (MARISENSE OY [FI]; HAEMAELAEINEN ESA [FI]; KARHUKETO HANNU [FI]; ENARV) 27 August 2009 (2009-08-27) | 1,10 | |
| A | * page 7, line 26 - page 8, line 5 * * page 18, line 4 - line 9 * | 2-9, 11-14 | |
| A | DE 101 37 588 A1 (ABB RESEARCH LTD [CH]) 13 February 2003 (2003-02-13) * paragraphs [0001], [0005], [0027], [0028], [0030], [0032], [0033], [0035], [0039] * * figures * | 1-14 | |

The present search report has been drawn up for all claims

| Place of search | Date of completion of the search | Examiner |
|---|---|---|
| The Hague | 28 August 2015 | Lechanteux, Alice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**   EP 15 15 6077

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2015

| Patent document cited in search report | | Publication date | Patent family member(s) | | Publication date |
|---|---|---|---|---|---|
| US 2008230497 | A1 | 25-09-2008 | US | 2008230497 A1 | 25-09-2008 |
| | | | US | 2008278408 A1 | 13-11-2008 |
| | | | WO | 2009058593 A1 | 07-05-2009 |
| WO 2012152745 | A1 | 15-11-2012 | AU | 2012252530 A1 | 09-01-2014 |
| | | | CN | 103946872 A | 23-07-2014 |
| | | | EP | 2705469 A1 | 12-03-2014 |
| | | | JP | 2014516175 A | 07-07-2014 |
| | | | NL | 2008761 C | 23-10-2013 |
| | | | SG | 194821 A1 | 30-12-2013 |
| | | | US | 2014291405 A1 | 02-10-2014 |
| | | | WO | 2012152745 A1 | 15-11-2012 |
| WO 2008054715 | A2 | 08-05-2008 | JP | 5684475 B2 | 11-03-2015 |
| | | | JP | 2010508181 A | 18-03-2010 |
| | | | US | 2008109309 A1 | 08-05-2008 |
| | | | WO | 2008054715 A2 | 08-05-2008 |
| WO 2009103857 | A1 | 27-08-2009 | CA | 2715571 A1 | 27-08-2009 |
| | | | EP | 2250638 A1 | 17-11-2010 |
| | | | JP | 2011520133 A | 14-07-2011 |
| | | | KR | 20100126427 A | 01-12-2010 |
| | | | US | 2012120471 A1 | 17-05-2012 |
| | | | WO | 2009103857 A1 | 27-08-2009 |
| DE 10137588 | A1 | 13-02-2003 | NONE | | |

EPO FORM P0459

For more details about this annex : see Official Journal of the European Patent Office, No. 12/82

**EP 2 927 897 A1**

**Patent documents cited in the description**

- KR 1020140037311
- KR 1020140041953
- KR 1020140093582